Europäisches Patentamt

European Patent Office

Office européen des brevets

(11) Numéro de publication: **0 011 536**
**A2**

## (12) DEMANDE DE BREVET EUROPEEN

(21) Numéro de dépôt: **79400805.2**

(22) Date de dépôt: **29.10.79**

(51) Int. Cl.³: **G 01 V 3/08**

(30) Priorité: 09.11.78 FR 7832191

(43) Date de publication de la demande:
28.05.80 Bulletin 80/11

(84) Etats Contractants Désignés:
DE FR GB NL SE

(71) Demandeur: Société Anonyme dite: SEMPLANOR
71/73, rue de Sainte Olle
F-59404 Cambrai - (Nord)(FR)

(72) Inventeur: Thumerel, Georges
6, rue Louis Blondel Ste Catherine les Arras
F-62223 St. Laurent Blangy Pas-de-Calais(FR)

(74) Mandataire: Lepage, Jean-Pierre
c/o BUGNION 23/25, rue N. Leblanc
F-59011 Lille Cedex - (Nord)(FR)

(54) Dispositif avertisseur, procédé de fabrication et appareil pour la détection.

(57) L'invention est relative à un dispositif avertisseur (22) permettant de détecter un élément longiligne (21) enterré ou emprisonné ou emprisonné dans un mur (20) auquel ce dispositif est associé, pour autoriser la détection de celui-ci depuis l'extérieur. Il est caractérisé par le fait qu'il est constitué en une matière non métallique à laquelle on a incorporé une poudre d'un matériau sensible aux phénomènes magnétiques que l'on a magnétisé.

Son procédé de fabrication est caractérisé par le fait que dans le cas d'une matière plastique, on mélange la poudre du matériau sensible aux phénomènes magnétiques lorsque la matière plastique est à l'état fondu, et que l'on magnétise cette poudre après l'extrusion de la matière plastique.

Le dispositif pour la détection du dispositif avertisseur réagit aux variations d'intensités et d'orientation du champ magnétique qu'il détecte.

Application à la détection de canalisations ou de tuyaux enterrés ou emprisonnés dans un mur.

Fig 2

Croydon Printing Company Ltd.

- 1 -

La présente invention est relative à un dispositif avertisseur destiné à être associé à un élément longiligne enterré ou emprisonné dans une paroi, isolé de l'extérieur par un matériau quelconque, pour permettre la détection de celui-ci depuis l'extérieur. L'invention est également relative au procédé de fabrication du dispositif avertisseur ainsi qu'à l'appareil permettant la détection de celui-ci.

Les éléments longilignes associés aux dispositifs avertisseurs sont par exemple des tuyaux, des canalisations, des gaines de protection enterrés ou emprisonnés dans une paroi, tels qu'une conduite d'eau, ou de gaz, ou encore un câble électrique ou téléphonique.

Des dispositifs avertisseurs sont actuellement connus sous forme d'un grillage. Son utilisation se révèle particulièrement intéressante dans le but de protéger les conduites ou les câbles enterrés puisque la mise à jour de ce grillage, signale la présence de la conduite ou du câble et permet de prendre les précautions indispensables. Un code conventionnel de couleurs du grillage permet par ailleurs l'identification du tuyau ou de la canalisation qui est signalé par ce grillage.

Par contre un tel dispositif avertisseur ne joue son rôle que lorsqu'on le met à jour, et ne joue aucun rôle dans le repérage de la conduite ou du câble depuis la surface du sol.

Or, s'il est aisé de repérer depuis la surface du sol, au moyen d'appareils plus ou moins sophistiqués, des canalisations métalliques ou des câbles dans lesquels la partie métallique prédomine, il n'est pratiquement pas possible de détecter les conduites réalisées en des matériaux non métalliques tels que l'amiante ciment, la matière plastique.

On a par conséquent songé à incorporer au dispositif avertisseur, qui dans la pratique est un grillage en matière plastique, un fil ou une bande métallique. Ce fil ou cette bande métallique est fixé sur le grillage. A l'aide d'appareils détecteurs de métaux, on peut détecter ce fil ou cette bande métallique, et ainsi repérer depuis la surface du sol la canalisation couverte par le grillage. C'est ce que propose le certificat d'utilité français No 2.153.826.

Cependant, la présence d'un tel fil ou d'une telle bande métallique rapporté sur le grillage pose un certain nombre de problèmes. Le premier de ces problèmes est celui de la fixation du fil ou de la bande métallique sur le grillage. Le certificat d'utilité français propose un collage ou un soudage de la partie métallique sur le grillage. Cet assemblage peut également se faire par un agrafage ou un tressage avec le grillage. Dans tous les cas ces opérations allongent et compliquent la fabrication du grillage.

De plus lors de l'utilisation du grillage et de la pose de celui-ci, la présence d'un fil ou d'une bande métallique rend beaucoup plus difficile le tronçonnage du grillage par des moyens de coupe lents et fatigants à utiliser tels que la scie ou la cisaille.

De plus, il est nécessaire de prévoir la jonction des parties métalliques d'un tronçon de grillage à l'autre afin d'assurer la continuité de la masse métallique, en soit faible puisqu'elle est de l'ordre de 500 grs pour 100 mètres linéaires de grillage.

Enfin la présence d'un fil ou d'une bande métallique sur le grillage nuit à sa souplesse et par conséquent à sa facilité d'enroulement pour le stockage ou son déroulement lors de la pose.

La détection d'un tel dispositif repose sur le principe de la détection d'une masse métallique enterrée. De ce fait l'appareil détecteur réagira non seulement lorsqu'il se trouve à proximité d'un tel grillage , mais aussi à proximité de n'importe quelle masse métallique enterrée, telle que des barres de fer utilisées dans les terrassements.

Il est à noter également qu'un tel dispositif ne permet pas d'identifier depuis la surface la nature du tuyau qui est enterré.

Le but de la présente invention est de proposer un dispositif avertisseur qui remédie à ces inconvénients.

Le dispositif avertisseur selon l'invention est constitué en une matière plastique à laquelle on a incorporé non pas des fils ou des bandes métalliques mais une poudre sensible aux phénomènes magnétiques que l'on a magnétisée.

L'utilisation de cette poudre magnétisée présente un certain nombre d'avantages dont le premier est de pouvoir être mélangée directement à la matière plastique thermo-fusible constituant le grillage avertisseur ou éventuellement la gaine ou la canalisation elle-même, avant son extrusion.

Un autre avantage est de pouvoir être détecté au moyen d'un appareil détectant les champs magnétiques, qui est moins sophistiqué qu'un appareil destiné à détecter des masses métalliques dans le sol. De plus la détection ne sera pas brouillée par la présence de masses métalliques étrangères présentes dans le sol.

Par ailleurs il sera possible de détecter le dispositif avertis-

0011536

seur contenant de la poudre magnétisée au moyen de l'appareillage traditionnel utilisé par exemple dans la détection des fils ou des bandes métalliques rapportés sur les grillages en matière plastique actuellement connus.

On hésite habituellement à incorporer des charges dans une matière plastique dans la mesure où il en résulte un amoindrissement de la résistance mécanique de celle-ci. Les essais pratiqués ont cependant montré qu'il était possible d'obtenir, selon l'invention, une aptitude suffisante à la détection sans pour autant réduire de façon critique la résistance mécanique du produit en incorporant une poudre très fine et en veillant à la répartition de cette poudre dans la matière plastique.

Le dispositif avertisseur selon l'invention, destiné à être associé à un élément longiligne enterré ou emprisonné dans un mur, pour autoriser la détection de celui-ci, depuis l'extérieur, est caractérisé en ce qu'il est constitué en une matière plastique incluant de façon dispersée une poudre d'un matériau sensible aux phénomènes magnétiques.

Le procédé de fabrication du dispositif avertisseur selon l'invention est caractérisé par le fait que l'on incorpore le matériau sensible aux phénomènes magnétiques à la matière plastique thermo-fusible à l'état fondu, avant son extrusion.

Le procédé de fabrication est également caractérisé par le fait que l'on soumet à l'action d'un champ magnétique le matériau sensible aux phénomènes magnétiques après l'extrusion du mélange matière plastique thermo-fusible et matériau sensible aux phénomènes magnétiques.

L'appareil de détection des dispositifs avertisseurs selon l'invention est caractérisé par le fait qu'il réagit en fonction de l'intensité du champ magnétique auquel il est soumis et/ou en fonction de son orientation.

L'invention sera mieux comprise si l'on se réfère à la description ci-dessous ainsi qu'aux dessins en annexe qui font partie intégrante de la description.

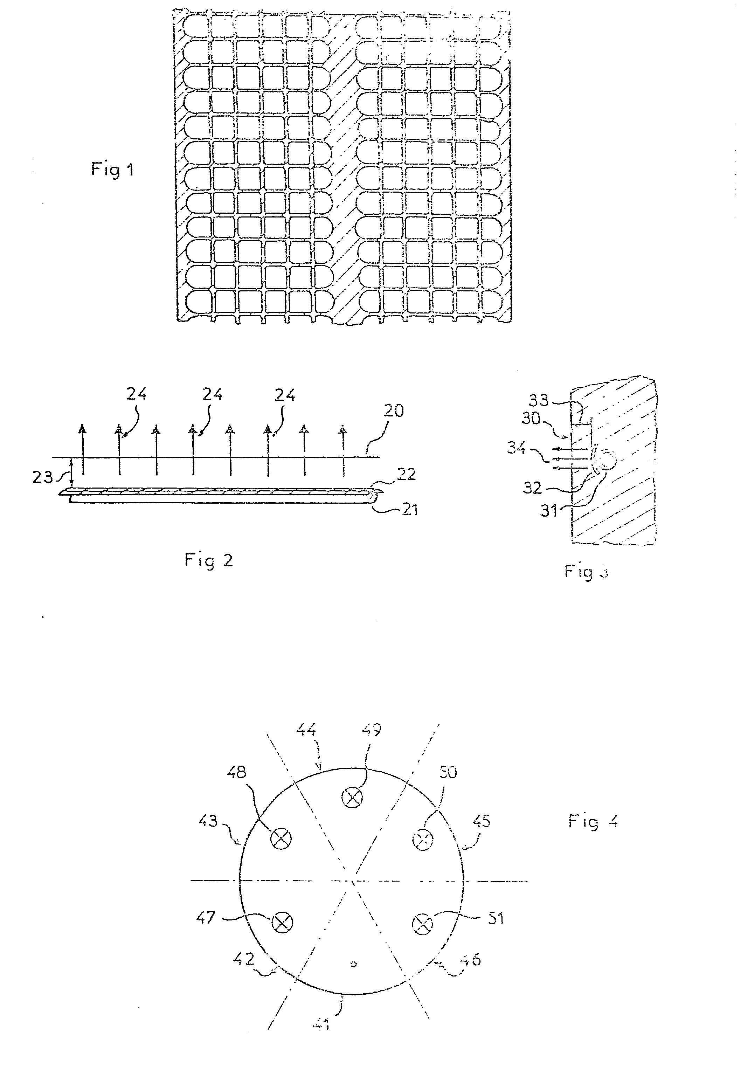

La figure 1 est une représentation non limitative du dispositif selon l'invention ; les figures 2 et 3 illustrent le fonctionnement du dispositif selon l'invention respectivement dans le cas d'une canalisation enterrée et dans le cas d'une canalisation emprisonnée dans un mur ; la figure 4 est relative à l'appareil de détection du dispositif avertisseur selon l'invention.

Dans un mode de mise en oeuvre de l'invention, le dispositif avertisseur se présente sous la forme d'un grillage tel que représenté en figure 1.

Le matériau de base le constituant est une matière plastique thermo-fusible, qui est extrudée suivant un procédé connu.

Ce grillage présente des armatures 1 de largeur et de forme variables de manière à présenter une bonne résistance aux sollicitations mécaniques lors de son utilisation.

Dans cette matière plastique est incorporée une poudre métallique et par exemple une poudre de fer broyée qui est répartie de façon homogène dans la masse de matière plastique constituant les armatures.

Cette poudre métallique est magnétisée, c'est-à-dire qu'elle émet un champ magnétique à partir de toute la surface du grillage. Du fait de la répartition homogène de la poudre à l'intérieur de la masse de matière plastique et du procédé selon lequel la poudre a été magnétisée, le champ magnétique émis par le dispositif avertisseur est uniforme et constant sur toute la surface du dispositif et donc toute la longueur de la canalisation ou de la conduite à laquelle est associé le dispositif avertisseur lors de son utilisation.

De préférence afin de permettre une détection plus facile, le champ magnétique émis par la poudre métallique est orienté sensiblement perpendiculairement à la surface du dispositif avertisseur. De plus, lors de l'utilisation de ce dispositif, il est préférable qu'il soit placé d'une manière telle que le champ magnétique émis par la poudre soit orienté vers l'extérieur, la canalisation ou la conduite se trouvant en-dessous du dispositif avertisseur.

A titre d'exemple non limitatif, un mode de mise en oeuvre du procédé de fabrication du dispositif selon l'invention est décrit ci-dessous.

On a broyé du fer jusqu'à une granulométrie inférieure à 40 $\mu$ puis on a intégré de façon homogène, par malaxage, la poudre ainsi obtenue à une matière plastique thermo-fusible à l'état fondu. On a ainsi incorporé une quantité de l'ordre de 8 grs de poudre métallique pour 100 grs de mélange. Le malaxage est réalisé d'une manière telle que la répartition de la poudre métallique dans la matière plastique à l'état fondu est homogène.

On a ensuite extrudé le mélange sous la forme d'une gaine perforée, ayant la forme désirée. Cette gaine est ensuite coupée dans le sens de la longueur pour former un grillage plat. Après extrusion de la gaine et après la coupe, le grillage obtenu est soumis à l'action d'un champ magnétique orientant les grains de poudre de fer et les chargeant magnétiquement. On a ainsi obtenu un grillage comportant environ 720 grs pour 100 mètres linéaires et dégageant un champ magnétique orienté. Du fait de la répartition homogène de la poudre métallique dans la matière plastique, le champ magnétique dégagé par le grillage lorsqu'il est plan est uniforme et constant sur toute la longueur du grillage.

Cependant en faisant varier la proportion de poudre métallique mélangée à la matière plastique thermo-fusible dans certaines limites, on pourra faire varier dans une certaine plage l'intensité du champ magnétique qui sera émis par le dispositif avertisseur.

Actuellement un code de couleurs conventionnel du grillage permet d'identifier la nature du tuyau ou de la conduite auquel il est associé. Cette identification n'est que visuelle c'est-à-dire qu'il faut mettre à jour le grillage pour réaliser cette identification.

Grâce à l'invention, en associant aux différentes couleurs de grillage qui permettent l'identification du tuyau une valeur de l'intensité magnétique, il sera possible lors de la détection de ce champ magnétique d'identifier depuis l'extérieur la nature du tuyau.

En fait lors de la fabrication du dispositif selon l'invention il suffit pour obtenir ce résultat d'associer à chaque couleur une proportion de poudre métallique magnétisable à mélanger à la matière plastique, puisque l'intensité du champ magnétique est directement fonction de la quantité de poudre métallique.

Il faut cependant noter que la proportion de poudre métallique mélangée à la matière plastique ne doit pas dépasser une certaine valeur de manière à ne pas nuire aux qualités mécaniques du dispositif avertisseur selon l'invention. De même elle ne devra pas être trop faible sinon le champ magnétique émis par la poudre ne pourra pas être perçu depuis l'extérieur. La proportion de 8 grs de poudre métallique pour 100 grs de mélange indiquée dans l'exemple ci-dessus est une valeur moyenne.

L'appareil pour la détection du grillage avertisseur est du type magnétomètre. Cet appareil permet de détecter le champ magnétique émis par la poudre métallique du dispositif avertisseur, et d'évaluer les paramètres de variations du champ magnétique qui sont l'intensité et l'orientation. Suivant ce qui est décrit précédemment, par l'évaluation des paramètres, l'appareil pour la détection permet d'identifier

0011536

la nature des canalisations ou des conduites que l'on détecte.

Un mode de mise en oeuvre non limitatif de l'appareil pour la détection est représenté en figure 4. Cet appareil présente un cadran 41. Ce cadran est divisé en secteurs égaux 42 à 46. Le nombre de ces secteurs, ici 5, n'est pas limitatif, il est donné à titre d'exemple.

Au milieu de chaque secteur et près de la périphérie du cadran se trouvent des voyants lumineux 47 à 51. Chaque secteur du cadran et donc chaque voyant lumineux est associé à une des couleurs conventionnelles du dispositif avertisseur. Ainsi, en fait, chaque secteur est associé à un type de canalisation ou de conduite enterrée ou emprisonnée dans un mur. Pour permettre une identification plus facile, on pourra prendre pour chaque voyant la même couleur que la couleur du dispositif avertisseur auquel il est associé. Lorsque l'appareil pour la détection détecte un champ magnétique d'une certaine intensité ou d'une certaine orientation, provenant d'un dispositif avertisseur associé à une canalisation ou à une conduite enterrée ou emprisonnée dans un mur, suivant la valeur du paramètre du champ magnétique détecté, un des voyants lumineux de l'appareil s'allume. Suivant la couleur du voyant lumineux allumé, et en se référant au code de couleurs conventionnelles, la conduite ou la canalisation associée au dispositif avertisseur est identifiée.

La figure 2 illustre un mode de mise en oeuvre des dispositifs selon l'invention. Ce mode de mise en oeuvre est relatif à une canalisation 21 enterrée à une profondeur 23. Le dispositif avertisseur 22 est disposé au-dessus de la canalisation 21, et placé entre cette canalisation 21 et l'extérieur 20.

Les flèches 24 schématisent le champ magnétique émis par la poudre métallique qui est incorporée dans le grillage avertisseur 22. Ce champ est perpendiculaire à la surface du grillage 22, il est uniforme et constant sur toute la longueur du grillage.

Dans le cas présent l'intensité du champ magnétique, qui dépend de la proportion de poudre métallique qui a été mélangée à la matière plastique du dispositif avertisseur, possède une valeur bien définie. Cette valeur est telle que lorsque l'on détectera le dispositif avertisseur au moyen de l'appareil pour sa détection, il sera possible d'après la couleur du voyant qui s'allume d'identifier la couleur du dispositif avertisseur et donc la nature de la canalisation à laquelle il est associé.

Il faut cependant remarquer que l'intensité du champ magnétique émis par le dispositif avertisseur, et qui est détectable à la surface du sol, est pratiquement indépendante de la profondeur 23 à laquelle est enterrée la canalisation. Les valeurs des intensités des champs magnétiques associées aux différentes couleurs ainsi que le dispositif avertisseur, sont d'ailleurs prévus pour absorber de légères variations de l'intensité du champ magnétique sans que l'identification soit affectée.

Lors du repérage de la canalisation enterrée, il suffit à un opérateur muni de l'appareil pour la détection, de suivre une route approximativement perpendiculaire à l'axe de la canalisation, et passant au-dessus. Lorsque l'opérateur détectera au moyen de son appareil un champ magnétique, il lui faut déplacer légèrement son appareil de manière à détecter le champ magnétique maximum.

L'appareil pour la détection se trouve ainsi placé à la verticale de la canalisation que l'opérateur a repéré. Le voyant lumineux qui est allumé sur son appareil permet à l'opérateur d'identifier la couleur du dispositif avertisseur enterré et donc la nature de la canalisation à laquelle il est associé.

L'opérateur ayant ainsi "accroché" le dispositif avertisseur, il lui suffit pour déterminer le tracé de la canalisation, de se déplacer de manière telle que le champ magnétique détecté par son appareil pour la détection reste sensiblement constant ; ainsi, l'appareil pour la détection sera maintenu à la verticale de la canalisation détectée.

La figure 3 illustre la mise en oeuvre du dispositif selon l'invention pour la détection d'une canalisation 31 emprisonnée dans un mur. Le processus pour la détection de cette canalisation 31 est identique à celui pour la détection d'une canalisation enterrée.

En effet, le dispositif avertisseur 32 aura été placé d'une manière telle que le champ magnétique schématisé par les flèches 34 émis par le dispositif avertisseur sera dirigé non plus verticalement mais horizontalement, de la canalisation 31 vers l'extérieur 30 de la paroi.

Pour la détection de cette canalisation, il suffit de déplacer l'appareil détecteur dans une direction approximativement perpendiculaire à l'axe de la canalisation, et de placer l'appareil de détection d'une manière telle que le champ détecté ait une intensité maximum.

L'opérateur aura ainsi "accroché" la canalisation. Son identification se fait grâce au voyant lumineux qui se trouve allumé sur l'appareil détecteur. Pour suivre le tracé de la canalisation, l'opérateur devra déplacer son appareil détecteur de telle manière que le champ

- 8 -

détecté par l'appareil reste sensiblement constant.

Le dispositif avertisseur décrit ci-dessus sous la forme d'un grillage auquel a été incorporée une poudre métallique magnétisée n'est pas limitatif. En effet selon l'invention, il est également possible d'incorporer cette poudre métallique à la matière qui constitue la canalisation ou le tuyau que l'on désire rendre détectable depuis l'extérieur.

Il suffit lors de la fabrication de la canalisation ou de la conduite de mélanger au matériau qui la constitue une poudre métallique de faible granulométrie que l'on magnétise par la suite.

Selon l'invention il est également possible de mélanger de la poudre métallique magnétisable à tout matériau non métallique afin d'autoriser sa détection ou son repérage.

- 9 -

REVENDICATIONS

1. Dispositif avertisseur, destiné à être associé à un élément longiligne invisible de l'extérieur, enterré, ou emprisonné dans une paroi, pour permettre la détection de celui-ci depuis l'extérieur, caractérisé par le fait qu'il est constitué en une matière non métallique incluant de façon dispersée une poudre d'un matériau sensible aux phénomènes magnétiques.

2. Dispositif avertisseur selon la revendication 1, caractérisé par le fait que la matière non métallique incluant de façon dispersée une poudre d'un matériau sensible aux phénomènes magnétiques est une matière plastique.

3. Dispositif avertisseur selon la revendication 2, caractérisé par le fait que le dit matériau sensible aux phénomènes magnétiques est uniformément réparti dans la matière plastique.

4. Dispositif avertisseur selon l'une quelconque des revendications précédentes, caractérisé par le fait que le dit matériau sensible aux phénomènes magnétiques est magnétisé sur toute la surface du dispositif.

5. Dispositif avertisseur selon la revendication 4, caractérisé par le fait que le champ magnétique émis par le matériau magnétisé est orienté sur toute la surface du dispositif.

6. Dispositif avertisseur selon la revendication 5, caractérisé par le fait que le champ magnétique émis par le matériau magnétisé est uniforme et constant sur toute la surface du dispositif.

7. Dispositif avertisseur selon la revendication 6, caractérisé par le fait que le champ magnétique émis par le matériau magnétisé est dirigé sensiblement perpendiculairement à la surface du dispositif.

8. Dispositif avertisseur selon l'une quelconque des revendications 5 à 7, caractérisé par le fait que l'intensité du champ magnétique est variable dans une plage définie de manière à permettre l'identification du dispositif avertisseur selon un code conventionnel.

9. Dispositif avertisseur selon l'une quelconque des revendications précédentes, caractérisé par le fait que la cite poudre d'un matériau sensible aux phénomènes magnétiques est une poudre de fer broyé.

10. Dispositif avertisseur selon la revendication 9, caractérisé par le fait que la dite poudre de fer broyé a une granulométrie inférieure à 40 $\mu$ .

11. Dispositif avertisseur selon la revendication 1, caracté-

- 10 -

risé par le fait que la poudre sensible aux phénomènes magnétiques est mélangée directement au matériau non métallique constituant le tube ou la canalisation.

12. Procédé de fabrication d'un dispositif avertisseur selon la revendication 2, caractérisé par le fait que l'on incorpore le matériau sensible aux phénomènes magnétiques à la matière plastique thermofusible lorsqu'elle est à l'état fondu.

13. Procédé de fabrication d'un dispositif avertisseur selon la revendication 12, caractérisé par le fait que l'on soumet à l'action d'un champ magnétique le matériau sensible aux phénomènes magnétiques après extrusion du mélange matière plastique thermo-fusible et matériau sensible aux phénomènes magnétiques.

14. Appareil pour la détection d'un dispositif avertisseur selon l'une quelconque des revendications 4 à 8, caractérisé par le fait qu'il réagit en fonction de l'intensité du champ magnétique auquel il est soumis et/ou en fonction de son orientation .

15. Appareil pour la détection selon la revendication 14, caractérisé par le fait qu'il comporte des voyants lumineux de différentes couleurs permettant l'identification du dispositif avertisseur et de la canalisation ou de la condutie à laquelle ce dispositif avertisseur est associé.

16. Appareil selon la revendication 14, caractérisé par le fait qu'il comporte des secteurs de cadran et des voyants lumineux permettant la distinction des champs magnétiques d'intensité différente .

0011536

Fig 1

Fig 2

Fig 3

Fig 4